Europäisches Patentamt

European Patent Office

Office européen des brevets

(11) Veröffentlichungsnummer: **0 108 864**
A2

(12) **EUROPÄISCHE PATENTANMELDUNG**

(21) Anmeldenummer: **83107448.9**

(22) Anmeldetag: **28.07.83**

(51) Int. Cl.³: **B 65 D 90/54,** B 65 G 53/22

(30) Priorität: **13.11.82 DE 3242091**

(43) Veröffentlichungstag der Anmeldung: **23.05.84**
**Patentblatt 84/21**

(84) Benannte Vertragsstaaten: **AT BE CH DE FR GB IT LI LU NL SE**

(71) Anmelder: **CLAUDIUS PETERS AKTIENGESELLSCHAFT, Kapstadtring 1, D-2000 Hamburg 60 (DE)**

(72) Erfinder: **Gaser, Ernst, Stettiner Strasse 62, D-2093 Stelle (DE)**

(74) Vertreter: **Glawe, Delfs, Moll & Partner Patentanwälte, Postfach 26 01 62 Liebherrstrasse 20, D-8000 München 26 (DE)**

(54) **Zementbehälter, insbesondere für ein Bohrinsel-Versorgungsschiff.**

㉗ Zementbehälter, insbesondere für ein Bohrinsel-Versorgungsschiff, der einen Boden mit pneumatischen Abzugseinrichtungen aufweist. Damit derselbe Behälter auch für den Transport bzw. für die Lagerung flüssigen Guts verwendbar ist, ist der mit den pneumatischen Abzugseinrichtungen ausgerüstete Boden auswechselbar gegen einen mit Abzugseinrichtungen für flüssiges Gut ausgerüsteten Boden. Jedem Behälter sind zweckmäßigerweise zwei unterschiedlich ausgestattete Böden zugeordnet, die mit Führungseinrichtungen, beispielsweise auf Schienen laufend, leicht in und außer Betriebsstellung bewegbar sind. Eine Spüleinrichtung in Verbindung mit einem Schmutzwasser-Auffangbehälter gestattet die Reinigung des Behälters bei Transportgutwechsel während der Leerfahrt.

ACTORUM AG

GLAWE, DELFS, MOLL & PARTNER      /1      PATENTANWÄLTE
ZUGELASSENE VERTRETER BEIM EUROPÄISCHEN PATENTAMT

RICHARD GLAWE
DR.-ING.

WALTER MOLL
DIPL.-PHYS. DR. RER. NAT.
ÖFF. BEST. DOLMETSCHER

KLAUS DELFS
DIPL.-ING.

ULRICH MENGDEHL
DIPL.-CHEM. DR. RER. NAT.

HEINRICH NIEBUHR
DIPL.-PHYS. DR. PHIL. HABIL.

Claudius Peters AG,
Hamburg

Zementbehälter, insbesondere
für ein Bohrinsel-
Versorgungsschiff

p   10889/83 EU

8000 MÜNCHEN 26
POSTFACH 162
LIEBHERRSTR. 20
TEL. (0 89) 22 65 48
TELEX 5 22 505 SPEZ
TELECOPIER (0 89) 22 39 38

2000 HAMBURG 13
POSTFACH 25 70
ROTHENBAUM-
CHAUSSEE 58
TEL. (040) 4 10 20 08
TELEX 21 29 21 SPEZ

HAMBURG

Beschreibung

Die Erfindung bezieht sich auf einen Zementbehälter, insbesondere für ein   Bohrinsel-Versorgungsschiff, der einen Boden mit pneumatischen Abzugseinrichtungen aufweist.

Bohrinsel-Versorgungsschiffe, die die Bohrinseln mit Zement und Bohrschlamm (Liquid Mud) versorgen, weisen eigens für diese Stoffe ausgebildete Behälter auf. Die Behälter für Zement haben die Form von Druckgefäßen, die sowohl zur Lagerung des Zementes während des Transports als auch zur Entleerung in pneumatischem Abtransport geeignet sind. Die Bohrschlammbehälter sind mit Einrichtungen versehen, die die Flüssigkeit in Bewegung halten, damit sie nicht sedimentiert, sowie mit Pumpen zur Entleerung. Zement und Bohrschlamm werden jedoch nicht ständig und auch nicht stets im gleichen Verhältnis zueinander benötigt. Eine Zwischenlagerung auf der Bohrinsel in größerem Umfang ist zu aufwendig. Infolgedessen fahren die Bohrinsel-Versorgungsschiffe nur mit Teillast, wenn das eine oder andere Gut gerade in geringerer Menge benötigt wird.

Der Erfindung liegt die Aufgabe zugrunde, eine wirtschaftlichere Versorgung zu ermöglichen, indem die Zementbehälter auch für den Transport von Bohrschlamm eingerichtet werden.

... 2

Die erfindungsgemäße Lösung besteht darin, daß der Boden eines Zementbehälters auswechselbar ist gegen einen Boden mit Abzugseinrichtungen für flüssiges Gut.

Die Austauschbarkeit der Behälterböden gestattet es, die Behälter im übrigen so auszuführen, daß sie für beide Transportgüter geeignet sind. Dies hat den Vorteil, daß der zur Verfügung stehende Behälterraum immer den tatsächlichen Erfordernissen entsprechend genutzt werden kann. Es ist weder ein übergroßer Laderaum erforderlich, noch eine größere Anzahl von Einzelschiffen. Da die Bohrinsel-Versorgungsschiffe auf jeder Fahrt voll ausgelastet werden können, wird ihr Einsatz rentabler und damit wirtschaftlicher.

Nach einem weiteren Merkmal der Erfindung kann der Behälter nach unten zu dem einen kleineren Durchmesser aufweisenden Boden konvergierende Wände aufweisen. Dieses an sich bekannte Merkmal gestattet es, den Boden entsprechend kleiner zu gestalten und damit den Aufwand zu verringern. Außerdem erleichtert diese Form die Entleerung und sichert einen geringen Materialaufwand bei hoher Druckfestigkeit.

Vorteilhafterweise sind die Tankböden absenkbar ausgeführt.

Zweckmäßigerweise sind Führungen im Zusammenhang mit dem Behälter vorgesehen, an denen die Böden beim Austausch in die Betriebsstellung unter dem Behälter und aus dieser heraus bewegbar sind. Diese Führungen können zu einer für beide Böden verwendbaren Führung vereinigt sein, beispielsweise in Gestalt einer sie tragenden Schiene oder einem Schienenpaar. Die Führung kann auch als Schwenkführung ausgebildet sein. Deren Achse ist zweckmäßigerweise horizontal oder vertikal angeordnet.

Damit die Verbindungsleitungen den Austausch der Böden
nicht behindern, sollen sie nach der Erfindung flexibel
oder lösbar ausgebildet sein.

Zweckmäßigerweise sind eine Spüleinrichtung und ein Schmutzwasser-Auffangbehälter vorgesehen. Dies gibt die Möglichkeit,
den Behälter auf der Rückfahrt des Schiffes für den Fall eines
Transportgutwechsels umzurüsten, so daß man mit einer kurzen
Liegezeit während der Beladung auskommt. Der Schmutzwasser-
Auffangbehälter ist zweckmäßigerweise in  der Bilge des
Schiffes angeordnet.

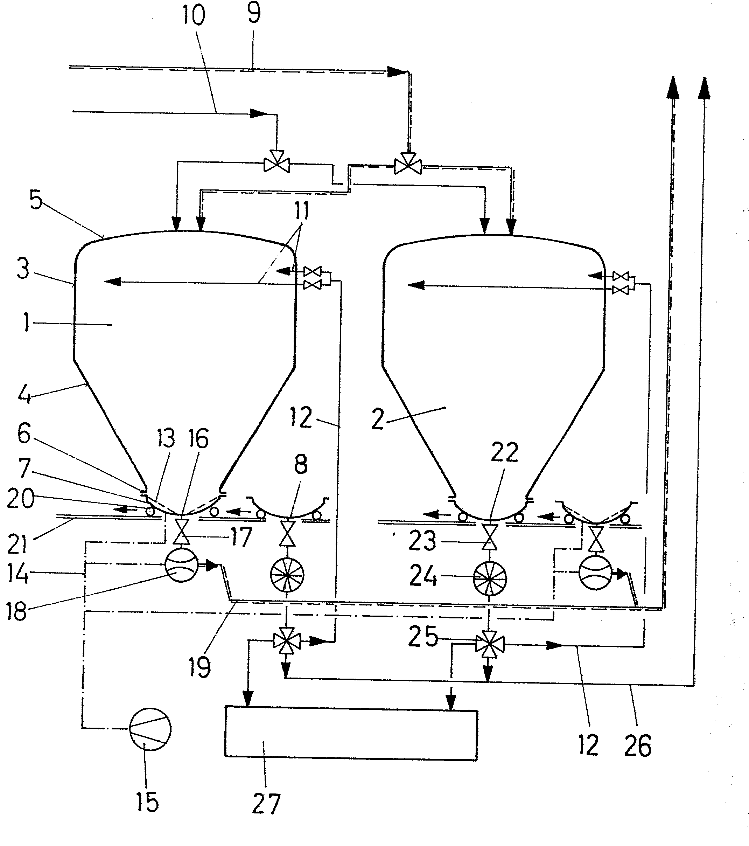

Sämtliche Behälter eines Schiffes können in der erfindungsgemäßen Weise ausgebildet sein. In vielen Fällen genügt
es jedoch auch, eine begrenzte Anzahl der Behälter wechselbar zu gestalten. Die Erfindung wird im folgenden näher
unter Bezugnahme auf die Zeichnung erläutert, die ein vorteilhaftes Ausführungsbeispiel der Erfindung in einer schematischen Seitenansicht veranschaulicht.

Man erkennt zwei Behälter 1 und 2,  die als Druckbehälter
mit einem oberen, zylindrischen Wandteil 3,  einem unteren,
kreiskonischen Wandteil 4,  einem Deckel 5  und einem
Bodenflansch 6  ausgebildet sind, an den einer der beiden
Böden 7  bzw. 8  anschließbar ist. In den Behälterdeckel 5
münden Füllleitungen 9  für Zement und 10  für Bohrschlamm.
Ferner sind an geeigneter Stelle an den Behälter Spül-
und/oder Umpumpdüsen 11  mit Zuleitung 12  angeschlossen.

Der Boden 7  ist mit pneumatischen Auflockerungseinrichtungen 13
ausgerüstet, die über eine Druckluftleitung 14  an ein

0108864

Gebläse 15 anschließbar sind. Die Auslaßöffnung 16 mündet über einen Schieber 17 in eine pneumatische Fördereinrichtung 18, die gleichfalls an das Gebläse 15 angeschlossen ist und den Zement in eine pneumatische Entleerungsleitungs 19 einspeist.

Der Boden 7 ist über Rollen 20 auf einem Gleis 21 fahrbar, das unter dem Behälter 1 in solcher Weise hindurchführt, daß der an den Behälter 1 anzuschließende Boden 7 bzw. 8 derart unter den Behälter gefahren werden kann, daß er aus seiner auf dem Gleis ruhenden Stellung heraus leicht an den Bodenflansch 6 mit geeigneten Verbindungs- und Dichtungsmitteln angeschlossen werden kann. Das Gleis führt neben der Betriebsstellung für einen anzuschließenden Boden beiderseits mindestens so weit, daß der jeweils nicht verwendete Boden neben dem in Betriebsstellung befindlichen Boden darauf abgestellt werden kann. Dies ist in der linken Hälfte der Zeichnung für den nicht in Betrieb befindlichen Boden 8 gezeigt. Soll dieser gegen den Boden 7 ausgetauscht werden, so wird der Boden 7 von dem Bodenflansch 6 gelöst, beide Böden werden in Pfeilrichtung verschoben, bis der Boden 8 sich unter dem Behälter 1 befindet und seinerseits mit dem Bodenflansch 6 des Behälters verbunden werden kann.

Während in der linken Hälfte der Figur der für die Zementförderung vorgesehene Boden an den Behälter angeschlossen dargestellt ist, ist rechts der für die Förderung von Bohrschlamm bestimmte Boden an den Behälter 2 angeschlossen. Die Auslaßöffnung 22 dieses Bodens führt über einen Schieber 23, Schlammpumpe 24 und Mehrwegeventil 25 entweder in die Entleerungsleitung 26, in die Umpumpleitung 12 oder in den Schmutzwasser-Auffangbehälter 27 in der Bilge des Schiffes.

0108864

Die Be- und Entladung erfolgt druckpneumatisch. Die Steuerung erfolgt über entpsrechende Ventile in den Anschlußleitungen.

Wenngleich der erfindungsgemäße Behälter in Verbindung mit einem Bohrinsel-Versorgungsschiff beschrieben wurde, in dessen Zusammenhang er besonders vorteilhaft erscheint, ist er doch auch in anderem Zusammenhang verwendbar, beispielsweise bei Tankfahrzeugen, die wahlweise für Schüttgut oder flüssiges Gut verwendbar sind oder auch in stationärer Aufstellung.

0108864

Patentansprüche

1. Zementbehälter, insbesondere für ein Bohrinsel-Versorgungsschiff, der einen Boden mit pneumatischen Abzugseinrichtungen aufweist, dadurch gekennzeichnet, daß der Boden (7) auswechselbar ist gegen einen Boden (8) mit Abzugseinrichtungen für flüssiges Gut.

2. Zementbehälter nach Anspruch 1, dadurch gekennzeichnet, daß er nach unten zu dem einen kleineren Durchmesser aufweisenden Boden (7,8) konvergierende Wände (4) aufweist.

3. Zementbehälter nach Anspruch 1 oder 2, dadurch gekennzeichnet, daß Führungen (21) für die Böden (7,8) zum Bewegen derselben in die und aus der Betriebsstellung unter dem Behälter (1,2) vorgesehen sind.

4. Zementbehälter nach Anpsruch 3, dadurch gekennzeichnet, daß eine Führung (21) für beide Böden (7,8) vorgesehen ist.

5. Zementbehälter nach Anspruch 3 oder 4, dadurch gekennzeichnet, daß die Führung (21) aus wenigstens einer die Böden (7,8) tragenden Schiene besteht.

6. Zementbehälter nach Anspruch 3 oder 4, dadurch gekennzeichnet, daß die Führung eine Schwenkführung ist.

7. Zementbehälter nach einem der Ansprüche 1 bis 6, dadurch gekennzeichnet, daß die Verbindungsleitungen flexibel sind.

8. Zementbehälter nach einem der Ansprüche 1 bis 7, dadurch gekennzeichnet, daß die Verbindungsleitungen lösbar sind.

9. Zementbehälter nach einem der Ansprüche 1 bis 8, dadurch gekennzeichnet, daß er mit einer Spüleinrichtung versehen ist.

10. Zementbehälter nach Anspruch 9, dadurch gekennzeichnet, daß mindestens ein Schmutzwasser-Auffangbehälter (27) vorgesehen ist.

0108864

p 10889/83 EU